# EUROPEAN PATENT APPLICATION

(11) **EP 1 340 614 A1**
(43) Date of publication of application: **03.09.2003**
(21) Application number: 03075543.3
(22) Date of filing: 24.02.2003
(51) Int. Cl.: B32B 15/08, B32B 15/01, E04F 13/12, E04G 21/30, E04D 3/30

(54) **Coated metal sheet**

(30) Priority: 27.02.2002 EP 02075791
(71) Applicant: Corus Bausysteme GmbH, 56070 Koblenz (DE)
(72) Inventor: Fick, Karl Friedrich, 56203 Höhr-Grenzhausen (DE); Flertmann, Christian, 56220 Urmitz (DE); Schuh, Dietmar, 56076 Koblenz (DE)
(74) Representative: Hansen, Willem Joseph Maria

(57) **Abstract**

The invention relates to a metal sheet for wall or roof covering, which metal sheet has a length direction and edge portions which after a forming operation of the metal sheet can engage with a retaining element mountable on a support structure, the metal sheet has an optional durable surface coating on at least one side thereof, and a removable protective surface coating arranged in its length direction, such as plastic foil or strip, and whereby the removable protective coating consists of multiple elongate lanes or strips arranged in the length direction of the metal sheet, and whereby the lanes or strips closest to an edge portion of the metal sheet overlaps a neighbouring lane or strip such that the lane or strip closest to and covering the edge portion of the metal sheet can be removed prior to or after a forming operation of such an edge portion. The invention relates also to a method of manufacturing such coated metal sheet.

## Description

The invention relates to a metal sheet for wall or roof covering, which metal sheet has a length direction and free edge portions which after a forming or flanging operation of the metal sheet can engage with a retaining element mountable on a support structure or engage with another formed or flanged metal sheet to form a standing seam structure, the metal sheet has an optional durable surface coating on at least one side thereof, and a removable protective surface coating arranged in its length direction, typically a plastic foil or strip. The invention is directed also to a method of manufacturing such coated metal sheets.

Such a metal sheet is known from European patent no. EP-0468204, which metal sheet is provided on one side with a surface coating in the form of a lacquer or similar covered by a protective plastic foil which can be drawn off. The adhesive bonded plastic foil is provided with perforations or material weakenings which are disposed in linear fashion, extend approximately along the bent portion or edge portion of the sheet metal length or at a distance therefrom and parallel thereto and are formed such that a foil area which adjoins the perforation lines can be separated from the other areas of the plastic foil. In use it is practice that the perforation lines are about 5 to 10 cm away from the free edge portion of the sheet.

A drawback of the known foil coated metal sheet is that in practice on a construction site the plastic foil is difficult to remove and does not always separate at the perforated lines or weakenings. The weakenings have to be prepared very precisely in order to avoid only a partial removal. A further drawback of the known foil coated metal sheet is that of the perforate lines is very difficult to apply for metal sheet having in its length direction a varying width, so-called tapered sheet, since it has to be calculated exactly how this perforated line should be arranged along the varying width of the metal sheet in order to remove the foil along the bent portion or edge portion of the sheet metal length.

NL-8302002 discloses a method for coating a metal sheet, typically a steel sheet, on all its sides with a plastic foil. The plastic foil is intended for permanently covering fully the metal sheet, and including the cut edge portions, in order to protect it against corrosion and the plastic foil is adhered to the metal sheet using inductive heating.

It is an object of the present invention to provide a metal sheet ideally for wall or roof covering, which metal sheet has a removable protective coating which is easier to remove on a construction site. It is another object of the present invention to provide a metal sheet for wall or roof covering, which metal sheet has a removable protective coating which is easy to remove and may be applied on metal sheet having in its length direction a varying width.

To achieve one of the objects the metal sheet in accordance with the invention is characterised in that the removable protective coating consists of multiple elongate lanes or strips arranged in the length direction of the metal sheet, and whereby the lanes or strips closest to a free edge portion of the metal sheet overlaps a neighbouring lane or strip such that the lane or strip closest to and covering the free edge portion of the metal sheet can be removed prior to or after a forming or flanging operation of such a free edge portion. More in particular the removable protective coating overlaps by laying partly on top of the neighbouring lane or strip, thus one above the other.

This achieves the effect that lane or strip closest to a free edge portion of the metal sheet can easily be removed in whole without affecting the position of its neighbouring lane or strip. Furthermore, this arrangement of protective coating may be used very successfully with tapered sheets since there is no critical arrangement for the overlap contrary to the position of the lines of perforations or weakenings in the prior art metal sheet.

In an embodiment of the metal sheet according to the invention the metal sheet is on at least one side provided with a durable surface coating made of a metallic material, e.g. a thin zinc or copper coating layer applied by for example immersion plating or a titanium coating or cladding applied by roll bonding. In particular thin metallic coatings require an initial protective coating during a forming operation, e.g. a bending operation or a roll-forming operation, to avoid any damaging thereof. Furthermore, such a removable protective coating avoids any undesirable fingerprints on the metallic coating during handling of the metal sheet. The intended purpose of the removable protective coating is not to protect the underlaying metal sheet against corrosion.

In an embodiment of the metal sheet according to the invention the metal sheet is made of an aluminium alloy. Preferably, the aluminium alloy is selected from the group consisting of AA1000, AA3000, AA5000 and AA6000-series aluminium alloys. Typical examples of suitable AA3000-series aluminium alloys are AA3003 and AA3004 alloys.

In a further embodiment the metal sheet has a final gauge in the range of 0.04 to 2.5 mm.

In another aspect of the invention there is provided a method of manufacturing coated metal sheet according to this invention, the method comprising the steps of providing a protective coating on one side only of the metal sheet, whereby multiple elongate lanes or strips are applied in an arrangement such that the lanes or strips closest to an edge portion of the metal sheet overlap a neighbouring lane or strip such that the lane or strip closest to and covering the edge portion of the metal sheet can be easily removed prior to or after a forming operation of such edge portion. The advantages of having such an arrangement of the lanes or strips in order to form a removable protective coating have been set out throughout the description.

The invention will now be illustrated by discussing the prior art and non-limitative embodiments, with reference to the accompanying figures, in which:
Fig. 1 shows a schematic perspective view of a coated metal sheet according to the prior art;
Fig. 2 shows a schematic cross-sectional view of a coated metal sheet according to the invention;
Fig. 3 shows a schematic perspective view of a tapered coated metal sheet according to the invention.

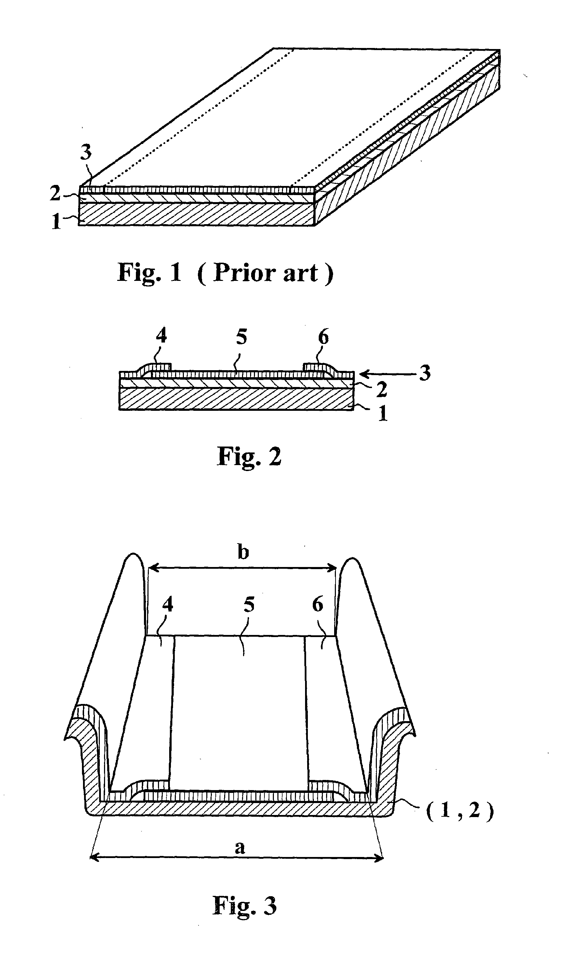

Fig. 1 shows schematically a coated metal sheet according to the prior art, and more in particular as known from EP-0468204 and incorporated herein by reference, consisting of a base metal sheet (1) coated with a lacquer layer (2), and which lacquer layer is protected by means of a removable adhesive bonded protective foil (3). The removable protective foil has perforations disposed in linear fashion extending along the edge portion of the metal sheet. The line with perforations is supposed to be located such that it falls at the edge of the first bend corner of the metal sheet (not shown).

Fig. 2 shows a schematic cross-section of the coated metal sheet in accordance with the invention, comprising of an metal base sheet (1), typically of an aluminium alloy, an optional durable surface coating (2) on at least one side of the metal base sheet, such as for example a metallic coating of immersion plated zinc or roll-clad stainless steel or titanium, and a removable protective coating (3) on one side only of the metal base sheet and consisting of multiple elongate lanes or strips of a plastic foil (4,5,6), such that the lanes (4,6) closest to the free edges of the metal sheets overlap with and preferably laying partly on top of the neighbouring central lane or lanes (5). The arrangement is such that the edge of the metal sheet in the thickness direction, and being the resultant of a cutting or slitting operation of the metal sheet, is essentially free from the removable protective coating. The width of the overlap may be chosen on a case-to-case basis, but is typically in a range of 0.5 to 5 cm. Also the width of the edges lanes (4,6) may be chosen on a case-to-base basis, but is typically in a range of up to 40 cm. The multiple lanes are typically bonded onto the metal base sheet or onto the durable surface coating by means of adhesive bonding. Optionally the part of the edges lanes (4,6) laying on top of the central lane or lanes (5) is not provided with any adhesive bonding, thereby assisting in a much easier peal-off mechanism. Since different lanes or strips are employed, also different kinds of plastic may be employed and different types of adhesive bonding, e.g. a bonding enabling the edge lanes (4,6) to be removed much easier than the central lane or lanes (5).

Fig. 3 shows a schematic perspective view of a tapered coated metal building sheet according to the invention having a width (a) on one end of the metal sheet and a width (b) on the other end of the metal sheet, such that (a)>(b). The metal sheet has a metal base (1) and an optional durable coating (2), and also multiple lanes (4,5,6) of removable protective coating. In the shown embodiment the free ends or edge portions of the metal sheet have been flanged into upstanding connecting ribs for engagement with elongate retaining clips (not shown), for example those described in GB-A-2167101, DE-20106148-U1 and WO-98/53158. The edge lanes (4,6) of the removable protective foil have a width such that it covers essentially the whole flanged section. These edge lanes may be removed after the initial flanging operation, while leaving the central lane or lanes (5) untouched allowing for a tread-proof area of sufficient width during further mounting of the roof structure. These central lanes can be removed afterwards. The overlapping lanes or strips allow for a large flexibility of metal sheets to be used, in particular also tapered sheets and sheet wherein one or both resultant flanges have an essentially convex or concave form. Whereas with the coated metal sheet according to the prior art the line with perforations was chosen such that it felt at the edge portion of the first bend of the metal sheet, creating great difficulty with non-rectangular sheet e.g. when producing tapered sheet, since the exact deformation line had to be known in advance. In the present coated metal sheet this is not critical anymore.

## Claims

1. Metal sheet (1) for wall or roof covering, which metal sheet has a length direction and edge portions which after a forming operation of the metal sheet can engage with a retaining element mountable on a support structure, the metal sheet has an optional durable surface coating (2) on at least one side thereof, and a removable protective surface coating (3) arranged in its length direction, such as plastic foil or strip, **characterised in that** the removable protective coating (3) is provided only on one side of the metal sheet and consists of multiple elongate lanes or strips (4,5,6) arranged in the length direction of the metal sheet, and whereby the lanes or strips (4,6) closest to an edge portion of the metal sheet overlaps a neighbouring lane or strip (5) such that the lane or strip (4,6) closest to and covering the edge portion of the metal sheet can be removed prior to or after a forming operation of such an edge portion.

2. Metal sheet according to claim 1, wherein the durable surface coating (2) is a metallic coating.

3. Metal sheet according to any one of the preceding claims, wherein the edge of the metal sheet in the thickness direction is essentially free from the removable protective coating.

4. Metal sheet according to any one of the preceding claims, wherein the metal sheet is aluminium alloy sheet.

5. Metal sheet according to claim 4, wherein the aluminium alloy is from the AA1000, AA3000, AA5000 or AA6000-series aluminium alloys.

6. Metal sheet according to any one of the preceding claims, wherein the metal sheet has in its length direction a tapered shape.

7. Metal sheet according to any one of the preceding claims, wherein the removable protective coating (4,6) overlaps by laying partly on top of the neighbouring lane or strip (5).

8. Method of manufacturing coated metal sheet according to any one of the preceding claims, comprising the steps of providing a protective coating on one side only of the metal sheet, whereby multiple elongate lanes or strips are applied in an arrangement such that the lanes or strips closest to an edge portion of the metal sheet overlap a neighbouring lane or strip such that the lane or strip closest to and covering the edge portion of the metal sheet can be removed prior to or after a forming operation of such edge portion.
